# EUROPEAN PATENT APPLICATION

(11) **EP 1 052 266 A1**
(43) Date of publication of application: **15.11.2000**
(21) Application number: 99109594.4
(22) Date of filing: 14.05.1999
(51) Int. Cl.: C08F 4/658, C08F 10/02

(54) **High activity polyethylene catalyst**

(71) Applicant: BP Chemicals S.N.C., Cergy St. Christophe, 95866 Cergy Pontoise Cedex (FR)
(72) Inventor: Ashton, David John, Doune Perthshire FK16 6AZ (GB); Partington, Stephen Roy, Walton on Thames Surrey KT12 3LW (GB)
(74) Representative: De Kezel, Eric

(57) **Abstract**

The present invention relates to a catalyst composition for producing polyethylene with relatively broad molecular weight distributions. It also relates to the catalyst preparation process comprising treating silica having reactive OH groups with an organomagnesium compound in a solvent ; then adding sequentially to said magnesium-containing support SiCl₄ and an alcohol to form an intermediate which is subsequently treated with a transition metal to form a transition metal-containing intermediate, the catalyst precursor. The catalyst precursor is then activated with an organoaluminum compound.

## Description

The present invention relates to a method for (co)polymerising ethylene and alpha-olefins in the presence of a catalyst composition which is prepared by a process comprising treating silica having reactive OH groups with an organomagnesium compound in a solvent ; then adding sequentially to said magnesium-containing support SiCl₄ and an alcohol to form an intermediate which is subsequently treated with a transition metal to form a transition metal-containing intermediate, the catalyst precursor. The catalyst precursor is then activated with an organoaluminum compound.

When resins are fabricated into products, it is imperative to assure that such products are readily processable. As is known to those skilled in the art, the degree of processability is influenced by the molecular weight distribution of the resins. Resins having a relatively broad molecular weight distribution produce products exhibiting improved processability, and environmental stress crack resistance (ESCR). Conversely, resins having a relatively narrow molecular weight distribution produce products more difficult to process and with reduced ESCR.

One of the measures of the molecular weight distribution of the resin is melt flow ratio (MFR), which is the ratio of high load melt index (HLMI or I₂₁ which uses a 21.6Kg weight) to melt index (I₂ which uses a 2.16Kg weight) for a given resin. The MFR value is believed to be an indication of the molecular weight distribution of the polymer, the higher the value, the broader the molecular weight distribution. Resins having relatively low MFR values, e.g., of about 20 to about 45, have relatively narrow molecular weight distributions.

For higher density polyethylene the n value can be used as a measure of the molecular weight distribution of the polymer. This n value is calculated as [log₁₀(I_{8.5}/I_{0.325})]/[log₁₀(8.5/0.325)] where I_{8.5} and I_{0.325} are the melt indexes measured under 8.5Kg and 0.325Kg respectively. The higher the n value, the broader the polymer molecular weight distribution.

The molecular weight of the ethylene (co)polymers may be controlled in a known manner, e.g., by using hydrogen. With the catalysts produced according to the present invention, molecular weight may be suitably controlled with hydrogen when the polymerisation is carried out at relatively low temperatures, e.g., from about 30°C to about 115°C. This control of molecular weight may be evidenced by a measurable positive change in melt index (I₂) of the polymer produced.

It is therefore a primary object of the present invention to provide a high activity catalyst for the polymerisation of alpha-olefins yielding products of a relatively broad molecular weight distribution.

It is an additional object of the present invention to provide a catalytic process for (co)polymerising ethylene and alpha-olefins which yields polyethylene resins of a relatively broad molecular weight distribution at high productivity.

A supported catalyst composition of this invention is prepared in a multistep process. In the first step, a mixture of a solid, porous carrier and a non-polar liquid, specifically a solvent, is contacted with at least one organomagnesium compound to form a slurry; the organomagnesium compound has the formula

RₘMg R^{'}ₙ

where R and R' are the same or different C₂ -C₁₂ alkyl groups, preferably C₄ -C₁₀ alkyl groups, more preferably C₄-C₈ alkyl groups, and most preferably both R and R' are butyl groups, and m and n are each 0, 1 or 2, providing that m + n = 2.

Subsequently, the mixture of the first step is sequentially contacted with SiCl₄ and an alcohol in a non-polar solvent. The resulting mixture is then contacted with at least one transition metal compound soluble in a non-polar solvent. The resulting catalyst precursor is subsequently contacted, for activation and activated catalyst production, with an organoaluminum compound.

The resulting activated catalyst composition has substantially higher activity and thus exhibits relatively high productivity in the (co)polymerisation of ethylene and alpha-olefins.

The catalyst composition also produces polymers having a broad molecular weight distribution. The molecular weight distribution is substantially broader than that of polymers produced with catalytic compositions wherein the SiCl₄ and alcohol are mixed prior to contacting with the organomagnesium treated support.

In accordance with the present invention, a supported titanium compound is incorporated onto a suitable support by impregnating this support first with a reactive magnesium compound and utilising this supported magnesium compound to react with a tetravalent titanium compound in a liquid medium. The unreacted titanium compound remains soluble in this liquid medium, while the reacted titanium species and the supported magnesium species are insoluble in this liquid medium.

As used herein, the concept of supporting a material on a carrier is intended to connote the incorporation of material (e.g., magnesium compounds and/or titanium compounds) onto the carrier by physical or chemical means. Accordingly, supported material need not necessarily be chemically bound to the carrier.

Suitable carrier materials which may be treated include solid, porous carrier materials such as silica, alumina and combinations thereof. Such carrier materials may be amorphous or crystalline in form. These carriers may be in the form of particles having a particle size of from about 0.1 micron to about 250 microns, preferably from 10 to about 200 microns, and most preferably from about 10 to about 80 microns. Preferably, the carrier is in the form of spherical particles, e.g., spray dried silica.

The carrier material is also porous. The internal porosity of these carriers may be larger than 0.2 cm³ /g,. The specific surface area of these carriers is at least 3 m² /g, preferably at least about 50 m² /g, and more preferably from, e.g., about 150 to about 1500 m² /g.

It is desirable to remove physically bound water from the carrier material prior to contacting this material with water-reactive magnesium compounds. This water removal may be accomplished by heating the carrier material to a temperature from about 100°C to an upper limit of temperature represented by the temperature at which sintering occurs. A suitable range of temperatures may, thus, be from about 100°C to about 800°C, e.g., from about 150°C to about 700°C.

Silanol groups (Si--OH) may be present when the carrier is contacted with water-reactive magnesium compounds in accordance with the present invention. These Si--OH groups may be present at from about 0.4 to about 3 mmol of OH groups per gram of carrier, but a preferred range is from about 0.4 to about 1.5 mmol of OH groups per gram of carrier. Excess OH groups present in the carrier may be removed by heating the carrier for a sufficient time at a sufficient temperature to accomplish the desired removal. More particularly, for example, a relatively small number of OH groups may be removed by sufficient heating at from about 150°C to about 250°C, whereas a relatively large number of OH groups may be removed by sufficient heating at least 500 or 800°C, most especially, from about 550°C to about 700°C. The duration of heating may be from 4 to 16 hours. In a most preferred embodiment, the carrier is silica which, prior to the use thereof in the first catalyst synthesis step, has been dehydrated by fluidizing it with nitrogen or air and heating at 700°C for at least 4 hours to achieve a surface hydroxyl group concentration of about 0.6 millimoles per gram. The surface hydroxyl concentration of silica may be determined according to J. B. Peri and A. L. Hensley, Jr., J. Phys. Chem., 32 (8), 2926 (1968). The silica of the most preferred embodiment is a high surface area, amorphous silica (surface area = 280 to 350 m² /g; pore volume of at least 1.55 cm³ /g), and it is a material marketed under the tradename of ES70 by Crosfield. When silica which has been dehydrated by fluidising with nitrogen or air and heating at 700°C for about 5 hours, the surface hydroxyl concentration is about 0.55 mmols/g.

While heating is a preferred means of removing OH groups inherently present in a carrier such as silica, other removal means are also possible such as chemical means. For example, a desired proportion of OH groups may be reacted with a chemical agent such as a hydroxyl reactive aluminum compound, e.g., triethylaluminum.

Other examples of suitable carrier materials are described in the Graff, U.S. Pat. No. 4,173,547. Note particularly the passage extending from column 3, line 62 to column 5, line 44 of this Graff patent. It is noted that internal porosity of carriers can be determined by a technique termed BET-technique, described by S. Brunauer, P. Emmett and E. Teller in Journal of the American Chemical Society, 60, pp. 209-319 (1938). Specific surface areas of carriers can also be measured in accordance with the above-mentioned BET-technique, with use of the standardised method as described in British Standards BS 4359, Volume 1, (1969).

The carrier material is slurried in a non-polar solvent and the resulting slurry is contacted with at least one organomagnesium compound. The slurry of the carrier material in the solvent is prepared by introducing the carrier into the solvent, preferably while stirring, and heating the mixture to about 25°C to about 100°C, preferably to about 35°C to about 75°C. The slurry is then contacted with the aforementioned organomagnesium compound, while the heating is continued at the aforementioned temperature.

The organomagnesium compound has the empirical formula :

RₘMgR^{'}ₙ

where R and R' are the same or different C₂ -C₁₂ alkyl groups, preferably C₄ -C₁₀ alkyl groups, more preferably C₄ - C₈ alkyl groups, and most preferably both R and R' are butyl groups, and m and n are each 0, 1 or 2, providing that m + n = 2.

Suitable non-polar solvents are materials which are liquid at reaction temperatures and in which all of the reactants used herein, e.g., the organomagnesium compound, the transition metal compound, SiCl₄, and the alcohol are at least partially soluble. Preferred non-polar solvents are alkanes, such as isopentane, hexane, n-heptane, octane, nonane, and decane, although a variety of other materials including cycloalkanes, such as cyclohexane, aromatics, such as benzene, toluene, and ethylbenzene, may also be employed. The most preferred non-polar solvents are isopentane, hexane, and heptane. Prior to use, the non-polar solvent should be purified, such as by percolation through silica gel and/or molecular sieves, to remove traces of water, oxygen, polar compounds, and other materials capable of adversely affecting catalyst activity.

In the most preferred embodiment of the synthesis of this catalyst it is important to add only such an amount of the organomagnesium compound that will be deposited--physically or chemically--onto the support since any excess of the organomagnesium compound in the solution may react with other synthesis chemicals and precipitate outside of the support. The carrier drying temperature affects the number of sites on the carrier available for the organomagnesium compound--the higher the drying temperature the lower the number of sites. Thus, the exact molar ratio of the organomagnesium compound to the hydroxyl groups will vary and must be determined on a case-by-case basis to assure that only so much of the organomagnesium compound is added to the solution as will be deposited onto the support without leaving any excess of the organomagnesium compound in the solution. Thus, the molar ratios given below are intended only as an approximate guideline and the exact amount of the organomagnesium compound in this embodiment must be controlled by the functional limitation discussed above, i.e., it must not be greater than that which can be deposited onto the support. If greater than that amount is added to the solvent, the excess may react with the reagents added subsequently, thereby forming a precipitate outside of the support which is detrimental in the synthesis of our catalyst and must be avoided.

For example, for the silica carrier heated at about 700°C, the amount of the organomagnesium compound added to the slurry is such that the molar ratio of Mg to the hydroxyl groups (OH) in the solid carrier is about 1 : 1 to about 4 : 1, preferably about 1.1 : 1 to about 2.8 : 1, more preferably about 1.2 : 1 to about 2 : 1 and most preferably about 1.8 : 1.

The amount of magnesium compound which is impregnated onto the carrier should be sufficient to react with the reaction products of adding SiCl₄, an alcohol and then the tetravalent titanium compound in order to incorporate a catalytically effective amount of titanium on the carrier in the manner set forth herein below. When a liquid containing an organomagnesium compound is contacted with a carrier the amount of magnesium in this liquid in terms of mmol may be essentially the same as that stated above with respect to that which is impregnated onto the carrier.

Essential components in the production of the catalyst composition of the invention are respectively SiCl₄ and an alcohol ROH where R is an alkyl group of 1 to 10 carbon atoms, such as methyl, ethyl, propyl, iso-propyl, butyl, iso-butyl, t-butyl, pentyl, iso-pentyl, 2,2-dimethyl-propyl, octyl, nonyl, decyl, etc. The alcohol is preferably butanol.

Generally the amount of SiCl₄ is such that the molar ratio of SiCl₄ to Mg ranges from 0.40 to 1.40.

Generally the amount of alcohol is such that the molar ratio of alcohol to Mg is at least about 1.

Generally the amount of alcohol is such that the molar ratio of alcohol to SiCl₄ ranges from 1.00 to 6.00, preferably 2.00 to 4.00.

The slurry of the carrier material containing the organomagnesium species in the solvent is maintained at temperatures of about 35°C to about 75°C, for introduction of either SiCl₄ or the alcohol.

What is essential according to the present invention is that the SiCl₄ and the alcohol compound must be added sequentially, i.e. the total amount of SiCl₄ must be added before addition of the alcohol compound or vice versa.

According to a preferred embodiment of the present invention, SiCl₄ is first added to the organomagnesium containing carrier slurry.

The slurry is then contacted with at least one transition metal compound soluble in a non-polar solvent. This synthesis step is conducted at about 25°C to about 75°C, preferably at about 30°C to about 65°C, and most preferably at about 45°C to about 60°C. In a preferred embodiment, the amount of the transition metal compound added is not greater than that which can be deposited onto the carrier. The exact molar ratio of Mg to the transition metal and of the transition metal to the hydroxyl groups of the carrier will therefore vary (depending, e.g. on the carrier drying temperature) and must be determined on a case-by-case basis. For example, for the silica carrier heated at about 200°C to about 850°C, the amount of the transition metal compound is such that the molar ratio of the transition metal, derived from the transition metal compound, to the hydroxyl groups of the carrier is about 1 to about 2.0, preferably about 1.3 to about 2.0. The amount of the transition metal compound is also such that the molar ratio of Mg to the transition metal is about 0.5 to about 3, preferably about 1 to about 2.

Suitable transition metal compounds used herein are compounds of metals of Groups 4, 5, or 6 as adopted by the new IUPAC notation, providing that such compounds are soluble in the non-polar solvents. Non-limiting examples of such compounds are titanium halides, e.g., titanium tetrachloride, titanium alkoxides e.g., where the alkoxide moiety contains an alkyl radical of 1 to 6 carbon atoms or combinations, vanadium halides, and vanadium alkoxides. The preferred transition metal compounds are titanium compounds, preferably tetravalent titanium compounds. The most preferred titanium compound is titanium tetrachloride. Mixtures of such transition metal compounds may also be used and generally no restrictions are imposed on the transition metal compounds which may be included. Any transition metal compound that may be used alone may also be used in conjunction with other transition metal compounds.

The reaction of the transition metal compound, such as the tetravalent titanium compound, in the liquid medium conveniently takes place by slurrying the solid carrier containing the reactive magnesium species in a solution of the tetravalent titanium compound and heating the reaction medium to a suitable reaction temperature. Preferred solvents for the tetravalent titanium compound are hexane or isopentane or heptane.

The supported catalyst precursor formed from components described above is then activated with suitable activators. Suitable activators include organometallic compounds, preferably aluminum alkyl compounds, such as dialkylaluminum halide e.g. dialkylaluminum chlorides, dialkylaluminum hydrides, alkylaluminum halides, e.g. alkylaluminum chlorides, and trialkylaluminum compounds. In aluminum alkyl compounds, the alkyl group contains 1 to 6 carbon atoms and thus may be methyl, ethyl, propyl, butyl, isobutyl, pentyl and hexyl. Preferably, the activators are trialkylaluminum compounds, in which the alkyl group contains 1 to 6 carbon atoms and thus may be methyl, ethyl, propyl, butyl, isobutyl, pentyl and hexyl. More preferably, the activator is trimethylaluminum or triethylaluminum.

The catalyst precursor may be activated in situ by adding the activator and catalyst precursor separately to the polymerisation medium. It is also possible to combine the catalyst precursor and activator before introduction into the polymerisation medium, e.g. for up to about 2 hours at a temperature from about -40°C to about 80°C.

A suitable activating amount of the activator may be used. The number of moles of activator per gram atom of titanium in the catalyst maybe, e.g., from about 1 to about 500 and is preferably greater than about 5.

Alpha-olefins may be polymerised with the catalysts prepared according to aspects of the present invention by any suitable process. Such processes include polymerisations carried out in suspension, in solution or in the gas phase. Gas phase polymerisations are preferred such as those taking place in stirred bed reactors and, especially, fluidised bed reactors.

The molecular weight of the polymer may be controlled in a known manner, preferably by using hydrogen. With the catalysts produced according to the present invention, molecular weight may be suitably controlled with hydrogen when the polymerisation is carried out at relatively low temperatures, e.g. from about 30°C to about 115°C.

A particularly desirable method for producing polyethylene resins, according to the present invention, is in a fluid bed reactor. Such a reactor and means for operating same is described in the Levine et al U.S. Pat. No. 4,011,382 or the Karol et al U.S. Pat. No. 4,302,566, each of which is relied upon and incorporated by reference herein.

In order to achieve the desired density ranges for the copolymers it is necessary to copolymerise enough of the alpha-olefin comonomers with ethylene. The amount of the comonomer needed to achieve this result will depend on the particular comonomer(s) employed.

It is essential to operate the fluid bed reactor at a temperature below the sintering temperature of the polymer particles. For the production of ethylene copolymers in the process of the present invention an operating temperature of about 30°C to 115°C is preferred, and a temperature of about 85°C to 115°C is most preferred.

The fluid bed reactor is operated at pressures of up to about 1000 psi, and is preferably operated at a pressure of from about 150 to 350 psi.

The following Examples illustrate reactants and parameters which may be used in accordance with aspects of the present invention.

### EXAMPLES

All manipulations were carried out using air free techniques.

### CATALYST PRECURSOR PREPARATION

### Example 1.

Into a 1 litre vessel, equipped with stirrer, was placed 20.5g silica (previously calcined to 700°C for 5hr under N₂) and 200ml hexane. The slurry was stirred at 250rpm and 50°C. Dibutylmagnesium (20.5 mmol) was added to this slurry at 50°C and the mixture was stirred at this temperature for 1 hr. Next SiCl₄ (13.53mmol) was added and the mixture stirred for 2 hrs at 50°C. Subsequently 1-Butanol (27.06mmol) was added and the mixture stirred for lhr at 50°C. Then, TiCl₄ (20.5 mmol) was added and the mixture was stirred for 1 hour at 50°C. The solvent was removed by evaporation under a strong nitrogen flow, followed by vacuum to yield a free-flowing powder.

### Example 2.

Into a 1 litre vessel, equipped with stirrer, was placed 25.9g silica (previously calcined to 700°C for 5hr under N₂) and 200ml hexane. The slurry was stirred at 250rpm and 50°C. Dibutylmagnesium (25.9 mmol) was added to this slurry at 50°C and the mixture was stirred at this temperature for 1 hr. Next 1-Butanol (34.19mmol) was added and the mixture stirred for 2hr at 50°C. SiCl₄ (17.09mmol) was added and the mixture stirred for 1 hr at 50°C. Then, TiCl₄ (25.9 mmol) was added and the mixture was stirred for 1 hour at 50°C. The solvent was removed by evaporation under a strong nitrogen flow, followed by vacuum to yield a free-flowing powder.

### Comparative Example 1.

Into a 1 litre vessel, equipped with stirrer, was placed 21.1 g silica (previously calcined to 700°C for 5hr under N₂) and 200ml hexane. The slurry was stirred at 250rpm and 50°C. Dibutylmagnesium (21.1 mmol) was added to this slurry at 50°C and the mixture was stirred at this temperature for 1 hr. Meanwhile 1-Butanol (27.85mmol) and SiCl₄ (13.93mmol) was added to a schlenk tube containing 50ml hexane, and the mixture stirred for 1.25hr at 50°C. This mixture was then added to the silica/DBM and the mixture stirred for 1 hr at 50°C. Then, TiCl₄ (21.1 mmol) was added and the mixture was stirred for 1 hour at 50°C. The solvent was removed by evaporation under a strong nitrogen flow, followed by vacuum to yield a free-flowing powder.

### Comparative Example 2.

Into a 1 litre vessel, equipped with stirrer, was placed ca 20g silica (previously calcined to 700°C for 5hr under N₂) and 200ml hexane. The slurry was stirred at 250rpm and 50°C. Dibutylmagnesium (1mmol/g silica) was added to this slurry at 50°C and the mixture was stirred at this temperature for 1 hr. Tetraethoxysilane (TEOS, 0.44mmol/g silica) was added and the mixture stirred for 2hrs at 50°C. Then, TiCl₄ (1 mmol/g silica) was added and the mixture was stirred for 1 hour at 50°C. The solvent was removed by evaporation under a strong nitrogen flow, followed by vacuum to yield a free-flowing powder.

### POLYMERIZATION

### LLDPE Test

Ethylene/1-hexene copolymers were prepared with these catalyst precursors and the cocatalyst triethylaluminum (TEAL). The procedure is described below.

A 5 liter stainless-steel autoclave equipped with a magnet stirrer was filled with hexane (1200 ml) and 3.0 mmol of cocatalyst at ambient temperature. The reactor was briefly vented to lower the pressure, closed and the stirring increased to 700 rpm. Hexene was then introduced, suficient to give LLDPE product (<0.925 density), and the temperature was increased to 85°C. The internal pressure was raised with hydrogen (sufficient to give melt index between 1 and 4 and then ethylene (2.8bar) was introduced. Catalyst precursor was then injected using ethylene, such that the total pC2 was 4 to 5bar. The polymerization reaction was carried out for 1 hour and then the ethylene supply was stopped. The reactor was allowed to cool to ambient temperature and the polyethylene was collected and dried in the air overnight. Given in Table 1 are the catalyst productivities, polymer flow indexes and MFR values, and densities of the polymer.

The data show that using an SiCl₄ and alcohol added sequentially (example 1) led to increased productivities and broader molecular weight polymer compared to premixing these components (comp ex. 1) or using tetraethoxysilane in the preparations (comp ex. 2). In addition the H₂ and comonomer responses of the butanol/SiCl₄ catalysts (ex 1 and comp ex. 1) were both significantly improved over the siloxane containing catalyst (comp ex. 2).

### HDPE Test

Ethylene homopolymers were prepared with these catalyst precursors and the cocatalyst triethylaluminum (TEAL). The procedure is described below.

A 5 liter stainless-steel autoclave equipped with a magnet stirrer was filled with hexane (1200 ml) and 3.0 mmol of cocatalyst at ambient temperature. The reactor was briefly vented to lower the reactor pressure, closed and the stirring increased to 700rpm. The temperature was increased to 90°C. The internal pressure was raised with hydrogen (sufficient to give melt index between 6 and 9 and then ethylene (2.8bar) was introduced. Catalyst precursor was then injected using ethylene, such that the total pC2 was 6bar. The polymerisation reaction was carried out for 1 hour and then the ethylene supply was stopped. The reactor was allowed to cool to ambient temperature and the polyethylene was collected and dried in the air overnight. Given in Table 2 are the catalyst productivities, polymer flow indexes and n values, and densities of the polymer.

The data show that using an SiCl₄ and alcohol added sequentially (example 2) led to broader molecular weight polymer compared to using tetraethoxysilane (comp ex. 2).

**Table 1**

| LLDPE | | | | | | | | |
|---|---|---|---|---|---|---|---|---|
| example number | T (°C) | pC2 bar | H2/C2 | hexene/C2 (ml/bar) | Productivity g/g/b/h | powder | | |
| | | | | | | MI | MFR | d |
| 1 | 85 | 4 | 0.175 | 50 | 833 | 2.34 | 72.0 | 0.913 |
| comparative 1 | 85 | 5 | 0.24 | 40 | 670 | 3.75 | 31.4 | 0.914 |
| comparative 2 | 85 | 4 | 0.28 | 125 | 506 | 0.94 | 27.8 | 0.919 |

**Table 2**

| HDPE | | | | | | | |
|---|---|---|---|---|---|---|---|
| example number | T (°C) | pC2 bar | H2/C2 | Productivity g/g/b/h | powder | | |
| | | | | | MI | n | d |
| 2 | 90 | 6 | 0.78 | 249 | 8.0 | 1.25 | >0.96 |
| comparative 2 | 90 | 6 | 0.58 | 141 | 6.5 | 1.20 | >0.96 |

Thus it is apparent that there has been provided, in accordance with the invention, a catalyst, that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

## Claims

1. A catalyst composition for polymerisation of ethylene or copolymerisation of ethylene with an alpha-olefin, to produce a resin product of broad molecular weight distribution, wherein the catalyst is prepared by a process which comprises the steps of:
(i) contacting a solid, porous carrier having reactive OH groups in a non-polar liquid with an organomagnesium compound which has the empirical formula :
RₘMgR'ₙ
where R and R' are the same or different C₄ -C₈ alkyl groups, and m and n are each 0, 1 or 2, providing that m+n=2, to form a product of step (i) which contains said carrier and incorporated therein a source of magnesium, wherein said organomagnesium compound is soluble in said non-polar liquid; wherein, the ratio of the number of moles of said organomagnesium compound to the number of moles said OH groups is from about 1.1 to about 4,
(ii) sequentially introducing into the liquid containing said product of step (i) SiCl₄ and R"OH wherein R" is selected from the group consisting of methyl, ethyl, propyl, n-butyl, pentyl, and n-octyl
wherein the molar ratio of R"OH to SiCl₄ ranging from 1.00 to 6.00; wherein the molar ratio of SiCl₄ to Mg is 0.40 to 1.40; and wherein the molar ratio of R"OH to Mg is at least about 1
(iii) contacting said slurry of step (ii) with at least one transition metal compound in a non-polar liquid medium, the number of moles of said transition metal compound being in excess of the number of moles of OH groups on said carrier prior to reaction with said organomagnesium compound in step (i), said transition metal compound being soluble in said non-polar liquid, and said organomagnesium compound contacted carrier being substantially insoluble in said liquid medium, whereby a reacted form of the transition metal becomes supported on said carrier to form a step (iii) precursor; and
(iv) contacting the step (iii) precursor with an activating amount of an organoaluminum compound.

2. The catalyst composition of claim 1, wherein the carrier is silica.

3. The catalyst of any of the preceding claims, wherein the organoaluminum is a trialkylaluminum.

4. The catalyst composition of claim 3, wherein the trialkylaluminum is triethylaluminum.

5. The catalyst of any of the preceding claims, wherein the molar ratio of the organoaluminum to transition metal ranges from 1 to 500.

6. The catalyst of any of the preceding claims, wherein the transition metal is titanium.

7. The catalyst of claim 6, wherein the transition metal is provided as tetravalent titanium compound.

8. The catalyst of claim 7, wherein the tetravalent titanium compound is titanium tetrachloride.

9. The catalyst of any of the preceding claims, wherein the molar ratio of R"OH to SiCl₄ is 2 to 4.

10. The catalyst of any of the preceding claims, wherein R"OH is n-butanol or n-octanol, preferably n-butanol.
